(19) Europäisches Patentamt

European Patent Office

Office européen des brevets

(11) **EP 1 473 278 A1**

(12) **EUROPÄISCHE PATENTANMELDUNG**

(43) Veröffentlichungstag:
**03.11.2004  Patentblatt 2004/45**

(51) Int Cl.⁷: **C02F 1/72**

(21) Anmeldenummer: **04450093.2**

(22) Anmeldetag: **22.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **30.04.2003  AT 6612003**

(71) Anmelder: **Dauser Industrieanlagen und Abwassertechnik GmbH**
**5071 Wals (AT)**

(72) Erfinder:
• **Dauser, Hermann**
  **83395 Freilassing (DE)**
• **Vierbauch, Josef**
  **9800 Spittal/Drau (AT)**

(74) Vertreter: **Babeluk, Michael, Dipl.-Ing. Patentanwalt,**
**Mariahilfer Gürtel 39/17**
**1150 Wien (AT)**

(54) **Verfahren zur Reinigung von Abwässern**

(57)    Die Erfindung betrifft Verfahren zur Reinigung von Abwässern, insbesondere aus Deponieanlagen oder industriellen Prozessen. Erfindungsgemäß werden die Abwässer einer kombinierten katalytischen Oxidation mittels Wasserstoffperoxid ($H_2O_2$) unter Zugabe von zweiwertigem ($Fe^{2+}$) und/oder dreiwertigem Eisen ($Fe^{3+}$) und einer alkalischen Neutralisation mit Natronlauge oder Kalkmilch samt Neutralisationsfällung von Schwermetallen unterzogen.

Fig. 1

**Beschreibung**

Die Erfindung betrifft ein Verfahren zur Reinigung von Abwässern, insbesondere aus Deponieanlagen oder industriellen Prozessen.

Abwässer aus industriellen Prozessen stellen weltweit eine wesentliche Gefahr für natürliche Ressourcen wie Wasser, insbesondere Trinkwasser, Grund und Boden dar. Besonderes Augenmerk ist dabei auf spezifische Abwässer einiger Produktions- und Dienstleistungsbetriebe zu richten, die sich beispielsweise von Hausabwässern durch folgende Eigenschaften unterscheiden:

- sehr schlechte biologische Abbaubarkeit der organischen Inhaltsstoffe;

- toxische Wirkung auf biologische Organismen;

- hoher Gehalt an Schwermetallen.

Als typische Verursacher derartiger Abwässer sind zu nennen:

- Hausmülldeponien

- Sondermülldeponien

- Altlasten

- Metallindustrie

- Galvanische Industrie

- Elektroindustrie

Vor einer Vermischung mit anderen, in der Regel häuslichen Abwässern, oder vor einer separaten weitergehenden Behandlung, müssen diese Abwässer vorbehandelt werden, um kein Gefahrenpotential für weitere beispielsweise biologische Behandlungsschritte darzustellen.

In diesem Zusammenhang werden in der DE 32 44 963 A1 und der EP 0 062 232 A1 Vorrichtungen zur Abwasserreinigung beschrieben, welche in einem Verfahrensschritt eine katalytische Oxidation mit Sauerstoff oder sauerstoffhaltigen Gasen in Gegenwart fester Katalysatorteilchen anwenden. Weiters wird in der DE 100 22 502 A1 ein Verfahren zur Metalleliminierung aus organisch saurer Lösung beschrieben, wobei über einen Sauerstoffeintrag neben dem Abbau der organischen Säuren eine Oxidation reduzierter Metallionen, vorzugsweise Eisen, stattfindet.

Schließlich wird in der EP 0 726 093 A1 ein Katalysator zur Oxidation von Abwasserverunreinigungen beschrieben, wobei die Oxidation in Gegenwart von Wasserstoffperoxid und Sauerstoff erfolgt.

Aufgabe der Erfindung ist es, ein Verfahren zur Reinigung von Abwässern, insbesondere aus Deponieanlagen oder industriellen Prozessen, ausgehend von bekannten Verfahren dahingehend zu verbessern, dass ein kostengünstiger und effizienter Einsatz auch bei schwierig zu handhabenden Abwässern möglich ist.

Die vorliegende Erfindung löst diese Aufgabe dadurch, dass die Abwässer einer kombinierten katalytischen Oxidation mittels Wasserstoffperoxid ($H_2O_2$) unter Zugabe von zweiwertigem ($Fe^{2+}$) und/oder dreiwertigem Eisen ($Fe^{3+}$) und einer alkalischen Neutralisation mit Natronlauge oder Kalkmilch samt Neutralisationsfällung von Schwermetallen unterzogen werden. Beispielsweise kann die Zugabe von zweiwertigem ($Fe^{2+}$) und/oder dreiwertigem Eisen ($Fe^{3+}$) in Form von Eisen(II)chlorid, Eisen(III)chlorid oder Eisen(II)sulfat oder deren Mischungen durchgeführt werden. Von Vorteil beim erfindungsgemäßen Verfahren ist insbesondere die einstufige Kombination der Fenton-Oxidation und der Schwermetallfällung.

Vorteilhafterweise begünstigen die für den Reaktionsschritt Oxidation eingesetzten Hilfsmittel den zweiten Reaktionsschritt Schwermetallfällung; die Abtrennung der Restprodukte des ersten Reaktionsschrittes ist gleichzeitig die Reaktion des zweiten Teilschrittes.

Die Oxidation des Abwassers hat die Zielsetzung, anorganische Stoffe in ökologisch verträgliche Wertigkeitsstufen zu überführen bzw. besser eliminierbar zu machen, sowie organische Stoffe durch Teiloxidation in eine biologisch abbaubare Form zu überführen bzw. durch vollständige Oxidation zu mineralisieren. Nicht oxidiert werden z.B. Carboxylsäuren, Ketone und Amide.

Als Oxidationsmittel wird bevorzugt Wasserstoffperoxid ($H_2O_2$) in handelsüblicher Konzentration eingesetzt, da das Oxidationspotential von Wasserstoffperoxid (Normalpotential) bei 1,78 V (verglichen mit Sauerstoff: 1,23 V) liegt.

Zur Oxidation schwieriger oxidierbarer Substanzen ist eine zusätzliche Aktivierung des Wasserstoffperoxids erforderlich. Dabei werden OH-Radikale gebildet (Oxidationspotential 2,80 V). Zur Aktivierung wird bevorzugt zweiwertiges Eisen ($Fe^{2+}$) verwendet. Im allgemeinen ist diese chemische Kombination als "Fenton's Reagenz" bekannt, wobei die vereinfachte Reaktionsgleichung folgendermaßen lautet:

$$H_2O_2 + Fe^{++} \rightarrow .OH + OH^- + Fe^{+++}$$

Durch verschiedene Sekundärreaktionen wird ein Teil des gebildeten dreiwertigen Eisens $Fe^{3+}$ wieder zu $Fe^{2+}$ rückgebildet, wodurch die Menge an zu dosierendem Katalyt beschränkt ist. Die erforderliche Dosierung erfolgt quantitativ proportional (Oxidationsmittel ~ CSB-Konzentration, Katalyt ~ Oxidationsmittel)

Die Reaktion verläuft unter kontinuierlicher Abwasserzufuhr im Durchlaufverfahren oder unter zyklischer Abwasserzugabe als Batch-Verfahren.

Oxidationsmittel und Katalyt werden automatisch kontinuierlich oder stoßweise (getaktet) zugeführt. Eine pH-Regelung überwacht den erforderlichen sauren Reaktionsbereich bzw. stellt gegebenenfalls durch Dosierung von Schwefelsäure ($H_2SO_4$) einen für die katalytische Oxidation günstigen pH-Bereich von pH ≤ 3,5 ein. Sinkt der pH-Wert im Verlaufe der Reaktion unter pH = 2, so wird die Dosierung von Oxidationsmittel bzw. Katalyt automatisch reduziert.

Als Reaktionszeit sind ca. ein bis zwei Stunden vorgesehen. Dadurch wird auch bei schwer abbaubaren Substanzen und niedrigen Abwassertemperaturen eine ausreichende Reaktions-Umsetzung erzielt. Durch ein großes Reaktorvolumen, welches durch ein Rührwerk umgewälzt werden kann und die damit verbundene Aufenthaltszeit kann eine weitgehende Ausnutzung bzw. Rückbildung des dreiwertigen Eisens erreicht werden.

Die oxidierten Abwässer, Reaktionsprodukte und Reste der Reaktionsmittel beenden den Oxidationsvorgang mit einem pH-Wert von pH = 3. Um diesen zu korrigieren ist eine alkalische Neutralisation erforderlich. Dies erfolgt unter automatischer pH-Regelung bis zum Neutralbereich bzw. leicht alkalischen Bereich (pH 7 bis 9,5).

Die Neutralisationsreaktion erfolgt vorzugsweise in einem Rohrreaktor bzw. Rohrflockulator oder Tankreaktor. Die Einmischung erfolgt in einem Bereich erhöhter Turbulenz. Bei einer Ausführung als Batch-Verfahren kann die Neutralisation nach Beendigung der Oxidationsphase im Oxidationsreaktor selbst erfolgen.

Zusätzlich zum pH-Ausgleich bewirkt die alkalische Neutralisation zwei Effekte:

- Entfernung des Katalyten durch Hydroxidbildung ($Fe(OH)_3$) mit paralleler Elimination partikulärer Stoffe bzw. gelöster Stoffe durch Flockulationsadsorption;
- Neutralisationsfällung von Schwermetallen durch Hydroxidbildung.

Das enthaltene zwei- bzw. dreiwertige Eisen fällt bei pH-Erhöhung als Eisenhydroxid bzw. Hydroxo-Komplex in amorphen Flocken aus. Dabei kommt es zur Adsorption partikulärer Stoffe sowie gelöster anorganischer und organischer Substanzen. Dies resultiert in einer zusätzlichen CSB-Reduktion und optischen Klärung des Abwassers. Schwermetall-Hydroxide werden ebenfalls in die Flockengebilde integriert.

Weiters bilden auch Schwermetalle pH-abhängig Hydroxide aus. Bei Einstellung eines für verschiedene Schwermetalle günstigen pH-Bereiches (z. B. Natronlauge: pH 7 bis 9, Kalkmilch: pH > 9) wird eine weitreichende Schwermetallfällung erzielt. Günstig wirkt sich bei diesem Verfahren der Vorgang der sogenannten "Co-Fällung" aus. Das bedeutet, dass die negativ geladenen Hydroxokomplexe des Eisenions Schwermetallionen adsorbieren und damit zur erhöhten Reduktion von Schwermetallen beitragen.

Gemäß einer Weiterbildung der Erfindung ist vorgesehen, dass nach der Neutralisationsfällung eine chemisch-physikalische Schlammabscheidung mit Hilfe eines Flockungshilfsmittels, beispielsweise eines organischen Polyelektrolyten, erfolgt.

Im Rohrflockulator bzw. Neutralisationsreaktor erfolgt nach Abschluss der Neutralisation und der Fällungsreaktion die Dosierung eines Flockungsmittels (z. B. organischer Polyelektrolyt) zur Makroflockung. Dabei werden die amorphen, diffusen Kleinflocken der Vorreaktionen weiter vernetzt.

Der Flockulationsprozess erfolgt beispielsweise in einem Flockulationsreaktor. Die Mischstrecke bzw. Mischzeit und die Mischenergie des Reaktors sind definiert, um bei konstanter Aufenthaltszeit und optimierter Turbulenz (Durchmischung) eine in Größe und Festigkeit gleichbleibende Flockenstruktur zu erzielen. Die Schaffung dieser gleichbleibenden Voraussetzungen ist Grundbedingung für eine konstante Reinigungsleistung des folgenden Abscheidungsvorganges.

Die Dosierung von organischen Polyelektrolyten als Flockungshilfsmittel erhöht die Abscheidbarkeit der gebildeten Flockenaggregate gegenüber den Reaktionsergebnissen der Oxidation/Neutralisationsfällung, sogenannten Mikroflocken, erheblich.

Die Ionität und Ionenstärke des einzusetzenden Polyelektrolyten und dessen Dosierkonzentration können spezifisch für den jeweiligen Anwendungsfall in halbtechnischen Vorversuchen ermittelt werden.

Erfindungsgemäß erfolgt die Abscheidung der durch das Flockungsmittel gebildeten Flocken durch Sedimentation, Filtration oder Flotation, oder direkt durch eine Schlammentwässerungseinheit. Der gesammelte Flockungsschlamm wird kontinuierlich oder sequentiell abgezogen und in einem Schlammtank gelagert. Zur Schaffung eines homogen durchmischten Schlammes kann im Schlammtank ein Rührwerk installiert sein.

Der abgeschiedene Schlamm weist einen Trockensubstanzgehalt von ca. 2% bis 10% TS auf. Durch die enthaltenen Schwermetalle sowie Reste schwer abbaubarer, organischer Substanzen muss dieser Schlamm auf geeignetem Wege entsorgt werden (Spezialdeponie oder andere entsprechende Entsorgung). Der Gehalt an organischer Substanz ist äußerst gering, der Schlamm besteht fast ausschließlich aus Eisenhydroxid-Schlämmen. Dadurch werden sogar zukünftige Deponiekriterien bezüglich maximalem Gehalt an organischen Stoffen erfüllt.

Da die entstehenden Entsorgungskosten direkt proportional zur Reststoffmenge sind, ist es in vielen Fällen ratsam, das Schlammrestvolumen auf geeignete Weise zu verringern. Dies kann durch Reduktion des Wassergehaltes erfolgen, wobei nach der chemisch-physikalischen Schlammabscheidung eine Schlammentwässerung, beispielsweise mittels Kammerfilterpresse, Siebbandpresse oder Seihband, erfolgt. Dabei werden in der Regel Trockensubstanzgehalte zwischen 15% und 25% TS, bei Kammerfilterpressen bis zu 40% TS erreicht.

Das gewonnene Filtrat kann - falls es mit Trübstoffen belastet ist - wieder dem Rohabwasser zugeführt werden. Eine Beeinträchtigung der chemischen Reaktion aufgrund der Aufkonzentration von möglicherweise störenden Ionen kann aufgrund der geringen Filtratmenge ausgeschlossen werden. Der entwässerte Schlamm wird in geeigneten Containern gesammelt. Weiters kann eine Nachfiltration des gewonnenen Filtrats, beispielsweise mittels Aktivkohle, erfolgen.

In vielen Fällen ist es notwendig, die Abwässer vor der katalytischen Oxidation einer Vorbehandlung zu unterziehen. Das Rohabwasser wird zunächst zur Vergleichmäßigung in ein dem Abwasseranfall entsprechendes, umgewälztes Sammelbecken geleitet. Danach werden die Abwässer einer geeignete Vorbehandlung (z.B. Siebung, Filtration, Sedimentation, Flotation) von groben Feststoffen (> 2 mm) unterzogen und bei Bedarf von Feinpartikeln befreit. Bei Abwässern, die im Durchschnitt kälter als 20°C sind, kann eine Aufheizung auf $\geq$ 20°C zur Reaktionsbeschleunigung und Chemikalieneinsparung beitragen.

Um die weitere Behandlung zu erleichtern, bzw. den Bedarf an Reaktionschemikalien in der katalytischen Oxidation zu verringern, kann eine Ansäuerung der Abwässer mit Mineralsäuren erfolgen.

Das erfindungsgemäße Verfahren ist insbesondere für biologisch schwer abbaubare Abwässer mit zusätzlichem Schwermetallgehalt geeignet, beispielsweise für Sickerwässer von Mülldeponien jeglicher Art.

Deponiesickerwässer sind mit geringen Mengen schwer oder biologisch nicht abbaubaren organischen Substanzen kontaminiert (CSB ca. 700 - 1000 mg/l, $BSB_5$ ca. 100 mg/l), (CSB = chemischer Sauerstoffbedarf, $BSB_5$ = biologischer Sauerstoffbedarf). Das Verhältnis CSB/$BSB_5$ ist typischer Weise ca. 10/1 bis 7/1.

Der Gehalt an adsorbierbaren organischen Kohlenwasserstoffen (AOX) liegt meist im Bereich > 0,50 mg/l, was in vielen Fällen einer der Hauptgründe für die Notwendigkeit einer zielführenden Vorreinigung ist.

Ebenfalls typisch bei Deponieabwässern ist das Vorhandensein der Schwermetalle Arsen, Blei, Chrom, Nickel, Thallium und Cadmium.

Andere, speziell industrielle Abwässer, z.B. aus petrochemischen Betrieben, können wesentlich höher kontaminiert sein. Meist sind die organischen Verschmutzungsträger hier wesentlich enger eingrenzbar (z.B. Phenole), auch bei Schwermetallfrachten sind zumeist einzelne Parameter erhöht.

Derartige Verschmutzungen können mit dem erfindungsgemäßen Verfahren auch bis zu Konzentrationen von ca. 50.000 mg CSB/l bzw. für Metalle bis über 1 g/l behandelt werden.

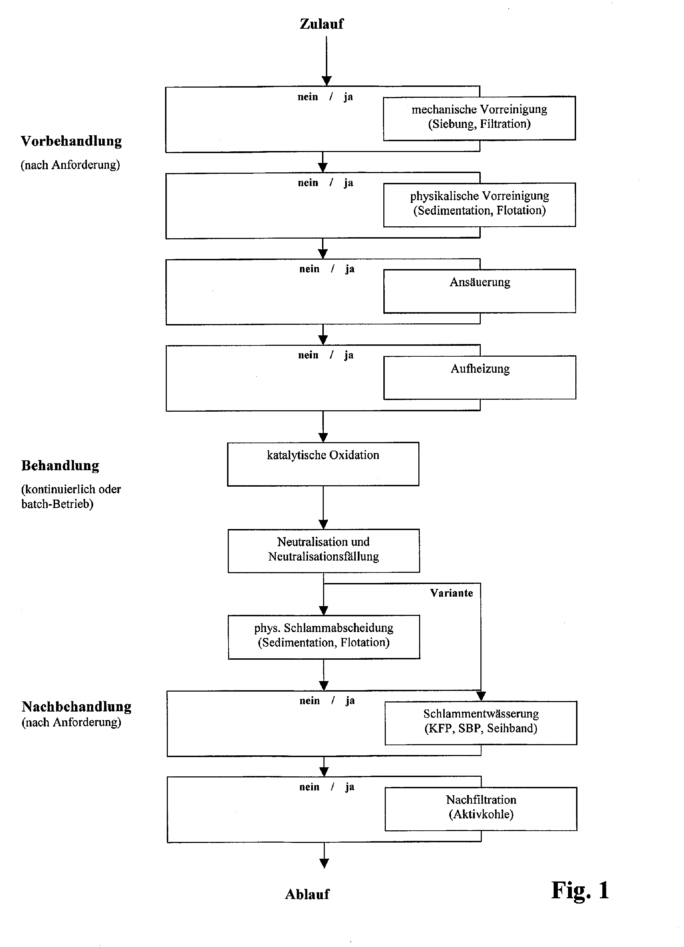

Das Flussdiagramm gemäß Fig. 1 zeigt die Abfolge der einzelnen erfindungsgemäßen Verfahrensschritte.

## Patentansprüche

1. Verfahren zur Reinigung von Abwässern, insbesondere aus Deponieanlagen oder industriellen Prozessen, **dadurch gekennzeichnet, dass** die Abwässer einer kombinierten katalytischen Oxidation mittels Wasserstoffperoxid ($H_2O_2$) unter Zugabe von zweiwertigem ($Fe^{2+}$) und/oder dreiwertigem Eisen ($Fe^{3+}$) und einer alkalischen Neutralisation mit Natronlauge oder Kalkmilch samt Neutralisationsfällung von Schwermetallen unterzogen werden.

2. Verfahren nach Anspruch 1, **dadurch gekennzeichnet, dass** die Zugabe von zweiwertigem ($Fe^{2+}$) und/oder dreiwertigem Eisen ($Fe^{3+}$) in Form von Eisen(II)chlorid, Eisen(III)chlorid oder Eisen(II)sulfat oder deren Mischungen durchgeführt wird.

3. Verfahren nach Anspruch 1 oder 2, **dadurch gekennzeichnet, dass** während der katalytischen Oxidation ein pH $\leq$ 3,5 eingestellt und ggf. durch Ansäuerung mit Schwefelsäure ($H_2SO_4$) hergestellt wird.

4. Verfahren nach einem der Ansprüche 1 bis 3, **dadurch gekennzeichnet, dass** nach der Neutralisationsfällung eine chemisch-physikalische Schlammabscheidung mit Hilfe eines Flockungshilfsmittels, beispielsweise eines organischen Polyelektrolyten, erfolgt.

5. Verfahren nach Anspruch 4, **dadurch gekennzeichnet, dass** die durch das Flockungsmittel gebildeten Flocken durch Sedimentation, Filtration oder Flotation abgeschieden werden.

6. Verfahren nach Anspruch 4 oder 5, **dadurch gekennzeichnet, dass** nach der chemisch-physikalischen Schlammabscheidung eine Schlammentwässerung, beispielsweise mittels Kammerfilterpresse, Siebbandpresse oder Seihband, erfolgt.

7. Verfahren nach Anspruch 6, **dadurch gekennzeichnet, dass** eine Nachfiltration, beispielsweise mittels Aktivkohle, erfolgt.

8. Verfahren nach einem der Ansprüche 1 bis 7, **dadurch gekennzeichnet, dass** vor der katalytischen Oxidation eine Aufheizung der Abwässer auf Temperaturen $\geq$ 20°C und/oder eine Ansäuerung mittels Mineralsäuren erfolgt.

**Zulauf**

**Vorbehandlung**

(nach Anforderung)

nein / ja
mechanische Vorreinigung
(Siebung, Filtration)

nein / ja
physikalische Vorreinigung
(Sedimentation, Flotation)

nein / ja
Ansäuerung

nein / ja
Aufheizung

**Behandlung**

(kontinuierlich oder
batch-Betrieb)

katalytische Oxidation

Neutralisation und
Neutralisationsfällung

Variante

phys. Schlammabscheidung
(Sedimentation, Flotation)

**Nachbehandlung**
(nach Anforderung)

nein / ja
Schlammentwässerung
(KFP, SBP, Seihband)

nein / ja
Nachfiltration
(Aktivkohle)

**Ablauf**

**Fig. 1**

**Europäisches Patentamt**

# EUROPÄISCHER RECHERCHENBERICHT

Nummer der Anmeldung

EP 04 45 0093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | BIGDA R J: "CONSIDER FENTON'S CHEMISTRY FOR WASTEWATER TREATMENT" CHEMICAL ENGINEERING PROGRESS, AMERICAN INSTITUTE OF CHEMICAL ENGINEERS. NEW YORK, US, Bd. 91, Nr. 12, 1. Dezember 1995 (1995-12-01), Seiten 62-66, XP000547288 ISSN: 0360-7275 * das ganze Dokument * ----- | 1-8 | C02F1/72 |
| A | PFISTER S ET AL: "WEITERGEHENDE MISCHWASSERBEHANDLUNG DURCH FENTONS REAGENZ. ADVANCEDTREATMENT OF COMBINED SEWAGE WITH FENTON'S REAGENT" KORRESPONDENZ ABWASSER, ABWASSERTECHNISCHE VEREINIGUNG, ST. AUGUSTIN, DE, Bd. 44, Nr. 1, 1997, Seiten 67-68,70,75, XP000680248 ISSN: 0341-1540 * das ganze Dokument * ----- | 1-8 | |
| A | WO 99/21801 A (PROX T E C POPRAD S R O ; MARO LADISLAV (SK); PROUSEK JOSEF (SK)) 6. Mai 1999 (1999-05-06) * das ganze Dokument * ----- | 1-8 | **RECHERCHIERTE SACHGEBIETE (Int.Cl.7)** C02F |
| A | EP 1 243 561 A (DEGUSSA) 25. September 2002 (2002-09-25) * das ganze Dokument * ----- -/-- | 1-8 | |

Der vorliegende Recherchenbericht wurde für alle Patentansprüche erstellt

| Recherchenort | Abschlußdatum der Recherche | Prüfer |
|---|---|---|
| Den Haag | 11. August 2004 | Liebig, T |

EPO FORM 1503 03.82 (P04C03)

**Europäisches Patentamt**

# EUROPÄISCHER RECHERCHENBERICHT

Nummer der Anmeldung

EP 04 45 0093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | SPECHT O ET AL: "MEHRSTUFIGE PILOTANLAGE ZUR OXIDATIVEN ABWASSERBEHANDLUNG NACH DEM FENTON-VERFAHREN (H2O2/FE-KATALYSATOR)" CHEMIE. INGENIEUR. TECHNIK, VERLAG CHEMIE GMBH. WEINHEIM, DE, Bd. 68, Nr. 6, 1. Juni 1996 (1996-06-01), Seiten 724-728, XP000588999 ISSN: 0009-286X * das ganze Dokument * ----- | 1-8 | |
| | | | **RECHERCHIERTE SACHGEBIETE (Int.Cl.7)** |
| Der vorliegende Recherchenbericht wurde für alle Patentansprüche erstellt | | | |

| Recherchenort | Abschlußdatum der Recherche | Prüfer |
|---|---|---|
| Den Haag | 11. August 2004 | Liebig, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 04 45 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2004

| Im Recherchenbericht angeführtes Patentdokument | | Datum der Veröffentlichung | Mitglied(er) der Patentfamilie | | Datum der Veröffentlichung |
|---|---|---|---|---|---|
| WO 9921801 | A | 06-05-1999 | SK | 146597 A3 | 07-05-1999 |
| | | | AU | 9660298 A | 17-05-1999 |
| | | | CZ | 9801383 A3 | 15-12-1999 |
| | | | WO | 9921801 A1 | 06-05-1999 |
| EP 1243561 | A | 25-09-2002 | DE | 10114177 A1 | 26-09-2002 |
| | | | CA | 2377379 A1 | 23-09-2002 |
| | | | EP | 1243561 A2 | 25-09-2002 |
| | | | JP | 2002346576 A | 03-12-2002 |
| | | | NZ | 517958 A | 31-10-2003 |
| | | | SK | 3742002 A3 | 03-06-2003 |
| | | | US | 2002153329 A1 | 24-10-2002 |

EPO FORM P0461

Für nähere Einzelheiten zu diesem Anhang : siehe Amtsblatt des Europäischen Patentamts, Nr.12/82